# EUROPEAN PATENT APPLICATION

(11) **EP 4 412 293 A1**
(43) Date of publication of application: **07.08.2024**
(21) Application number: 22874804.2
(22) Date of filing: 23.09.2022
(51) Int. Cl.: H04W 24/10

(54) **VOICE FALLBACK TARGET CELL SELECTION METHOD AND APPARATUS, STORAGE MEDIUM AND ELECTRONIC DEVICE**

(30) Priority: 28.09.2021 CN 202111146754
(71) Applicant: ZTE Corporation, Shenzhen, Guangdong 518057 (CN)
(72) Inventor: LI, Tengfei, Shenzhen, Guangdong 518057 (CN)
(74) Representative: Vossius & Partner Patentanwälte Rechtsanwälte mbB
(86) International application number: PCT/CN2022/121086
(87) International publication number: WO 2023/051418

(57) **Abstract**

Embodiments of the present application provide methods and apparatus for selecting a voice fallback target cell, a storage medium and an electronic device. The method includes: configuring, by a base station, a measurement task for a terminal based on a target frequency prioritization specified by a preset voice fallback rule; and receiving a measurement report for target frequencies, and selecting a voice fallback target cell of a corresponding target frequency based on the measurement report, the measurement report is reported by the terminal based on the target frequency prioritization. The embodiments of the present application help to solve that it is difficult to take into consideration a fallback success rate, a fallback latency, and a voice sensing communication indicator of the fallback target cell only based on the prioritization configuration of the target frequencies.

## Description

### CROSS-REFERENCE TO RELATED APPLICATION(S)

This application claims priority to Chinese Application No. 202111146754.4, filed on September 28, 2021, and entitled "Voice Fallback Target Cell Selection Method and Apparatus, Storage Medium and Electronic Device", the disclosures of which are incorporated herein by reference in their entities.

### FIELD

The present application relates to the technical field of communications, and in particular to methods and apparatus for selecting a voice fallback target cell, a storage medium and an electronic device.

### BACKGROUND

In a 3GPP mobile communication system, since the influence of a voice service on a user is large, an operator usually needs to preferably ensure that the voice service can be carried out properly. If the currently registered network cannot provide the voice service, it is necessary to carry out the voice service by falling back of the user to other suitable networks, and relatively typical voice fallback processes include evolved packet system (EPS) voice fallback (typically represents a voice fallback process from 5G to 4G) and circuit switched fallback (CSFB) (typically represents a voice fallback process from 4G to 2G/3G).

In general, the operator uniformly plans, based on a voice fallback success rate and a latency indicator, the voice fallback target frequency prioritization according to whole-network coverage situations. The higher the whole-network coverage ratio of a frequency is, the higher the voice fallback priority thereof is, the higher the measurement configuration order thereof is, and the greater the probability of the terminal preferably measuring and reporting the frequency is.

The current prioritization configuration of the voice fallback target frequencies has the following problems: before a voice fallback process is triggered, the measurement configuration orders may have been fixed due to some other measurement tasks, such that it cannot be ensured that the terminal definitely performs measurement reporting based on a frequency prioritization expected by the operator; and even if the terminal performs measurement reporting based on the frequency prioritization expected by the operator, due to the complexity and diversity of the practical network environment, it cannot be ensured that the voice sensing user experience of a target cell under a higher priority frequency is certainly better than that of a lower priority frequency.

Since it is difficult to take into consideration a fallback success rate, a fallback latency, and a voice sensing communication indicator of a fallback target cell only based on the prioritization configuration of target frequencies, an effective solution has not been proposed at present.

### SUMMARY

Embodiments of the present application provide methods and apparatus for selecting a voice fallback target cell, a storage medium and an electronic device, so as to at least solve that it is difficult to take into consideration a fallback success rate, a fallback latency, and a voice sensing communication indicator of a fallback target cell only based on the prioritization configuration of target frequencies.

According to one embodiment of the present application, provided is a method for selecting a voice fallback target cell, including: a base station configuring a measurement task for a terminal based on a target frequency prioritization specified by a preset voice fallback rule; and receiving a measurement report for target frequencies, and selecting a voice fallback target cell of a corresponding target frequency based on the measurement report, where the measurement report is reported by the terminal based on the target frequency prioritization.

According to another embodiment of the present application, provided is a method for selecting a voice fallback target cell, including: a terminal receiving a measurement task, where the measurement task is configured by a base station for the terminal based on a target frequency prioritization in EPS Fallback; and the terminal reporting a measurement report for target frequencies to the base station based on the configured measurement task, such that the base station selects a voice fallback target cell of a corresponding target frequency based on the measurement report.

According to another embodiment of the present application, provided is an apparatus for selecting a voice fallback target cell, including: a configuration unit for configuring a measurement task for a terminal based on a target frequency prioritization specified by a preset voice fallback rule; and a receiving and selecting unit for receiving a measurement report for target frequencies, and selecting a voice fallback target cell of a corresponding target frequency based on the measurement report, where the measurement report is reported by the terminal based on the target frequency prioritization.

According to another embodiment of the present application, provided is an apparatus for selecting a voice fallback target cell, including: a receiving unit for receiving a measurement task, where the measurement task is configured by a base station for a terminal based on a target frequency prioritization in EPS Fallback; and a reporting unit for reporting a measurement report for target frequencies to the base station based on the configured measurement task, such that the base station selects a voice fallback target cell of a corresponding target frequency based on the measurement report.

According to yet another embodiment of the present application, further provided is a computer readable storage medium having computer program stored thereon, where the computer program is configured to implement, when executed, the steps in any one of the foregoing method embodiments.

According to yet another embodiment of the present application, further provided is an electronic device, including a memory and a processor, where the memory having computer program stored thereon, and the processor is configured to execute the computer program to implement the steps in any one of the foregoing method embodiments.

By means of the embodiments of the present application, the base station configures the measurement task for the terminal based on a target frequency prioritization specified by the preset voice fallback rule; the base station receives a measurement report for target frequencies, where the measurement report is reported by the terminal based on the target frequency prioritization, and selects the voice fallback target cell of a corresponding target frequency based on the measurement report; and after selecting the corresponding voice fallback target cell based on the received measurement report, the base station may determine the voice fallback target cell based on the target frequency prioritization and the communication indicator(s) in the measurement report. Therefore, it may help to solve that it is difficult to take into consideration a fallback success rate, a fallback latency, and a voice sensing communication indicator of the fallback target cell only based on the prioritization configuration of the target frequencies.

### BRIEF DESCRIPTION OF THE DRAWINGS

FIG. 1 is a block diagram of a hardware structure of a mobile terminal of a method for selecting a voice fallback target cell according to an embodiment of the present application;
FIG. 2 is a flowchart of a method for selecting a voice fallback target cell according to an embodiment of the present application;
FIG. 3 is a flowchart of another method for selecting a voice fallback target cell according to an embodiment of the present application;

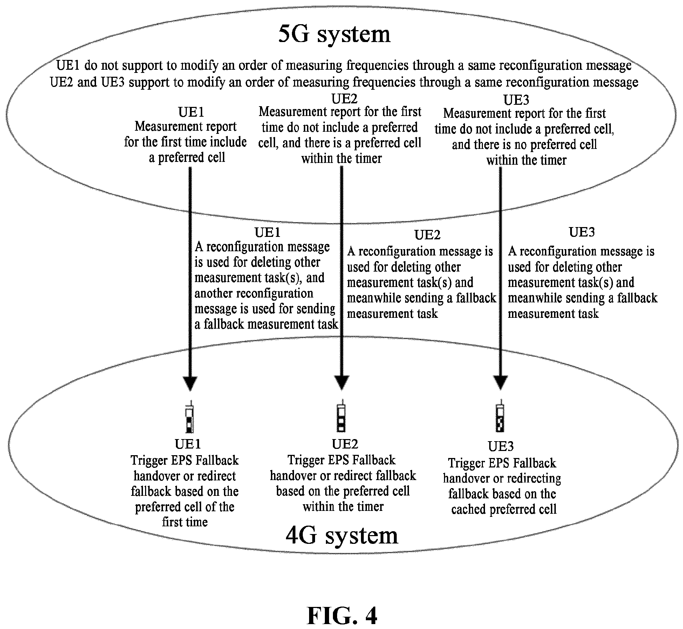

FIG. 4 is a schematic flowchart of yet another method for selecting a voice fallback target cell according to an embodiment of the present application;
FIG. 5 is a schematic structural diagram of an apparatus for selecting a voice fallback target cell according to an embodiment of the present application; and
FIG. 6 is a schematic structural diagram of another apparatus for selecting a voice fallback target cell according to an embodiment of the present application.

### DETAILED DESCRIPTION OF EMBODIMENTS

Hereinafter, the embodiments of the present application will be described in detail with reference to the drawings and in combination with embodiments.

It should be noted that, the terms "first" and "second" and the like in the specification, claims and the above-mentioned drawings of the present application are used for distinguishing similar objects, and are not necessarily used for describing a specific sequence or precedence order.

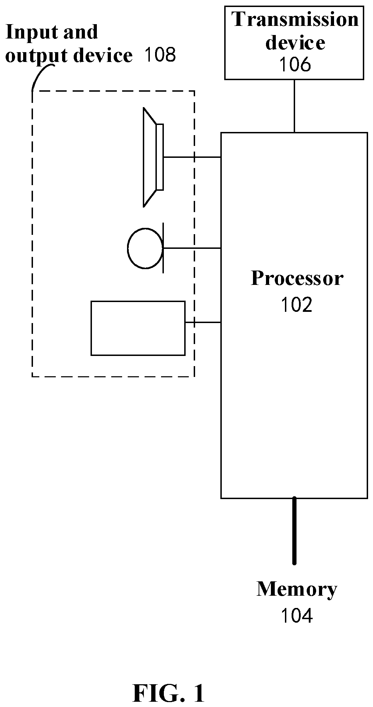

The method embodiments provided in the embodiments of the present application may be executed in a mobile terminal, a computer terminal, or a similar computing apparatus. Taking operation in the mobile terminal as an example, FIG. 1 is a block diagram of a hardware structure of a communication apparatus of a method for selecting a voice fallback target cell according to an embodiment of the present application. As shown in FIG. 1, the mobile terminal may include one or more (only one is shown in FIG. 1) processors 102 (the processor 102 may include, but is not limited to, a processing apparatus such as a micro control unit (MCU) or a field programmable gate array (FPGA)), and a memory 104 for storing data, wherein the mobile terminal may further include a transmission device 106 for a communication function, and an input and output device 108. Those ordinary skilled in the art can understand that, the structure shown in FIG. 1 is merely schematic, and is not intended to limit the structure of the mobile terminal mentioned above. For example, the mobile terminal may further include more or fewer components than those shown in FIG. 1, or have a different configuration from that shown in FIG. 1.

The memory 104 may be used for storing computer programs, for example, software programs and modules of application software, such as a computer program corresponding to the method for selecting the voice fallback target cell in the embodiments of the present application. By means of executing the computer program stored in the memory 104, the processor 102 executes various functional applications and data processing, that is, implements the above method. The memory 104 may include a high-speed random access memory, and may further include a non-volatile memory, such as one or more magnetic storage apparatuses, a flash memory, or other non-volatile solid-state memories. In some instances, the memory 104 may further include memories that are disposed remotely relative to the processor 102, and these memories may be connected to the mobile terminal through a network. Instances of the network include, but are not limited to, the Internet, an intranet, a local area network, a mobile communication network, and combinations thereof.

The transmission device 106 is used for receiving or transmitting data through a network. A specific instance of the network may include a wireless network provided by a communication provider of the mobile terminal. In one instance, the transmission device 106 includes a network interface controller (NIC for short), which may be connected with other network devices through a base station, so as to communicate with the Internet. In one instance, the transmission device 106 may be a radio frequency (RF for short) module, which is used for communicating with the Internet in a wireless manner.

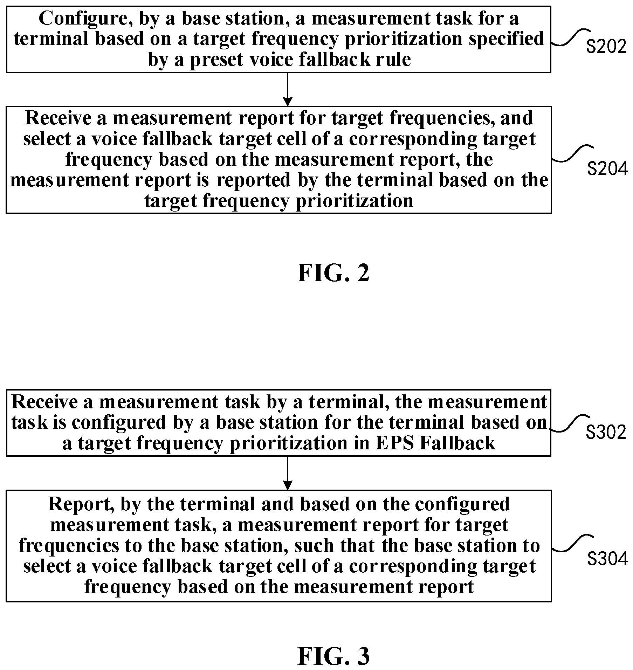

The present embodiment provides a method for selecting the voice fallback target cell implementing on the communication apparatus architecture shown in FIG. 1, and FIG. 2 is a flowchart of a method for selecting a voice fallback target cell according to an embodiment of the present application. As shown in FIG. 2, the process includes the following:
S202, a base station configures a measurement task for a terminal based on a target frequency prioritization specified by a preset voice fallback rule; and
S204, receiving a measurement report for target frequencies, and selecting a voice fallback target cell of a corresponding target frequency based on the measurement report, where the measurement report is reported by the terminal based on the target frequency prioritization.

In S202, in practical applications, the base station(s) may be different base station(s) such as 3G, 4G, or 5G base station, which is not limited in the present application in any way. For an EPS Fallback user, for example, a 5G base station deletes other measurement task(s) and related measurement object(s) through dedicated signaling, and configures the measurement task for the terminal based on a target frequency prioritization specified by EPS Fallback.

In S204, in practical applications, after receiving the measurement report, the 5G base station evaluates, in combination with the signal strength/quality, load, interference and other sensing factors of neighbor cells, whether there is a need to wait for other measurement report for preferred frequencies, where the preferred frequencies here may include a frequency that provides better call quality for a user terminal UE.

By means of the embodiment of the present application, the base station configures the measurement task for the terminal based on the target frequency prioritization specified by the preset voice fallback rule; the base station receives a measurement report for target frequencies, and selects a voice fallback target cell of a corresponding target frequency based on the measurement report, where the measurement report is reported by the terminal based on the target frequency prioritization; and the base station configures the measurement task for the terminal based on the target frequency prioritization specified by EPS Fallback, and selects the corresponding voice fallback target cell after receiving the measurement report. Therefore, it may help to solve that it is difficult for the prioritization configuration of the target frequencies in EPS Fallback to take into consideration a fallback success rate, a fallback latency, and a voice sensing communication indicator of the fallback target cell, such that the prioritization configuration of the target frequencies in EPS Fallback can take into consideration the fallback success rate, the fallback latency, and the voice sensing communication indicator of the fallback target cell. Moreover, the voice fallback target cell can be determined based on the target frequency prioritization and the communication indicator(s) in the measurement report.

The present embodiment provides a method for selecting the voice fallback target cell implementing on the communication apparatus architecture shown in FIG. 1, and FIG. 3 is a flowchart of another method for selecting a voice fallback target cell according to an embodiment of the present application. As shown in FIG. 3, the process includes the following:
S302, a terminal receives a measurement task, where the measurement task is configured by a base station for the terminal based on a target frequency prioritization in EPS Fallback; and
S304, the terminal reports a measurement report for target frequencies to the base station based on the configured measurement task, such that the base station selects a voice fallback target cell of a corresponding target frequency based on the measurement report.

In S302, in practical applications, for an EPS Fallback user, for example, the terminal UE receives other measurement task(s) and related measurement object(s), which are deleted by a 5G base station through dedicated signaling, and configures the measurement task based on a target frequency prioritization specified by EPS Fallback.

In S304, in practical applications, after receiving the measurement report reported by the UE, the 5G base station evaluates, in combination with the signal strength/quality, load, interference and other sensing factors of neighbor cells, whether there is a need to wait for other measurement report for preferred frequencies. The preferred frequencies here may include a frequency that provides better call quality for the user terminal UE.

By means of the embodiment of the present application, the terminal receives the measurement task, which is configured by the base station for the terminal based on the target frequency prioritization in EPS Fallback; the terminal reports the measurement report for target frequencies to the base station based on the configured measurement task, such that the base station selects the voice fallback target cell of a corresponding target frequency based on the measurement report; and the base station configures the measurement task for the terminal based on the target frequency prioritization specified by EPS Fallback, and the terminal selects the corresponding voice fallback target cell after receiving the measurement report. Therefore, it may help to solve that it is difficult for the prioritization configuration of the target frequencies in EPS Fallback to take into consideration a fallback success rate, a fallback latency, and a voice sensing communication indicator of the fallback target cell, such that the prioritization configuration of the target frequencies in EPS Fallback can take into consideration the fallback success rate, the fallback latency, and the voice sensing communication indicator of the fallback target cell. Moreover, the voice fallback target cell can be determined based on the target frequency prioritization and the communication indicator(s) in the measurement report.

In one embodiment, after selecting the voice fallback target cell of a corresponding target frequency based on the measurement report, S202 includes: when the measurement report indicates that there is a target neighbor cell meeting a preset condition, using the target neighbor cell as the voice fallback target cell of the terminal.

In one embodiment, in S204: the base station configuring the measurement task for the terminal based on the target frequency prioritization in EPS Fallback includes:
when the terminal supports to modify an order of measuring frequencies through a same measurement reconfiguration message, sending a first EPS Fallback measurement reconfiguration message to a first terminal, where the first EPS Fallback measurement reconfiguration message is used for deleting a historical measurement task and a historical measurement object, and configuring a current measurement task for the first terminal based on the target frequency prioritization in EPS Fallback; and
when the terminal does not support to modify the order of measuring frequencies through a same measurement reconfiguration message, sending a second EPS Fallback measurement reconfiguration message and a third EPS Fallback measurement reconfiguration message to the first terminal, where the second EPS Fallback measurement reconfiguration message is used for deleting the historical measurement task and the historical measurement object, and the third EPS Fallback measurement reconfiguration message is used for configuring a current measurement task for the first terminal based on the target frequency prioritization in EPS Fallback.

In one embodiment, determining that the terminal supports to modify the order of measuring frequencies through the same measurement reconfiguration message based on at least one of the following: a system/frequency selection priority (RFSP) index; an international mobile equipment identity software version (IMEISV); or user equipment (UE) capability.

In one embodiment, the preset condition includes at least one of the following that:
a neighbor cell measurement report parameter meets a first preset threshold, where the neighbor cell measurement report parameter includes at least one of the following: reference signal received power (RSRP), reference signal received quality (RSRQ), or signal to interference plus noise ratio (SINR);
a neighbor cell load parameter meets a second preset threshold, where the neighbor cell load parameter includes at least one of the following: radio resource control (RRC), uplink and downlink physical resource block (PRB) utilization ratio, control channel element (CCE) utilization ratio, central processing unit (CPU) utilization ratio, and the like;
a neighbor cell interference parameter meets a third preset threshold, where the neighbor cell interference parameter includes at least one of the following: uplink signal to interference plus noise ratio (SINR), noise interference (NI), modulation and coding scheme (MCS), channel quality indicator (CQI), or block error rate (BLER); or
a neighbor cell sensing factor parameter meets a fourth preset threshold, where the neighbor cell sensing factor parameter includes at least one of the following: internet protocol throughput (IP throughput), mean opinion score (MoS), packet loss rate, or latency.

In one embodiment, the method for selecting the voice fallback target cell further includes:
using a neighbor cell with a target weighted result greater than or equal to a preset threshold value as a target cell, where the target weighted result is derived by at least one of the following:
performing weighted summation calculation based on a weight corresponding to each of the neighbor cell measurement report parameters, to derive a weighted value for the neighbor cell measurement report parameters as the target weighted result;
performing weighted summation calculation based on a weight corresponding to each of the neighbor cell load parameters, to derive a weighted value for the neighbor cell load parameters as the target weighted result;
performing weighted summation calculation based on a weight corresponding to each of the neighbor cell interference parameters, to derive a weighted value for the neighbor cell interference parameters as the target weighted result; or
performing weighted summation calculation based on a weight corresponding to each of neighbor cell sensing factor parameters, to derive a weighted value for the sensing factor parameters as the target weighted result.

In one embodiment, the method for selecting the voice fallback target cell further includes: when the measurement report indicates that there is a target neighbor cell meeting the preset condition, triggering an EPS Fallback handover or redirection operation for the terminal; and
when the measurement report indicates that there is no target neighbor cell meeting the preset condition, using the measurement report as a first measurement report and caching the measurement report, and setting a monitoring duration based on a timer.

In one embodiment, in the method for selecting the voice fallback target cell, the timing duration is manually and statically configured, or the timing duration is calculated based on a number of EPS Fallback target frequencies.

In one embodiment, the method for selecting the voice fallback target cell further includes:
receiving a second measurement report sent by the terminal within the monitoring duration;
when the second measurement report indicates that there is a target neighbor cell meeting the preset condition, triggering the EPS Fallback handover or redirection operation for the terminal;
when the second measurement report indicates that there is no target neighbor cell meeting the preset condition, comparing the second measurement report with the first measurement report; and
when a comparison result indicates that a number of parameters meeting the preset condition of a neighbor cell in the second measurement report is greater than a number of parameters meeting the preset condition in the first measurement report, replacing the first measurement report with the second measurement report.

In one or more embodiments, using a neighbor cell with a target weighted result greater than or equal to a preset threshold value as a target cell, where the target weighted result is derived by at least one of the following:
performing weighted summation calculation based on a weight corresponding to each of neighbor cell measurement report parameters, to derive a weighted value for the neighbor cell measurement report parameters as the target weighted result;
performing weighted summation calculation based on a weight corresponding to each of neighbor cell load parameters, to derive a weighted value for the neighbor cell load parameters as the target weighted result;
performing weighted summation calculation based on a weight corresponding to each of neighbor cell interference parameters, to derive a weighted value for the neighbor cell interference parameters as the target weighted result; or
performing weighted summation calculation based on a weight corresponding to each of neighbor cell sensing factor parameters, to derive a weighted value for the neighbor cell sensing factor parameters as the target weighted result; and
when a comparison result indicates that the target weighted result of the neighbor cell in the second measurement report is greater than the target weighted result in the first measurement report, replacing the current measurement report with a measurement report in a cache. In one embodiment, the method for selecting the voice fallback target cell further includes: when the monitoring duration expires, triggering the EPS Fallback handover or redirection operation based on cells included in the measurement report in the cache.

In one embodiment, the method for selecting the voice fallback target cell further includes:
a terminal UE performing weighted summation calculation based on a weight corresponding to each of the neighbor cell measurement report parameters, to derive a weighted value for the neighbor cell measurement report parameters;
the UE performing weighted summation calculation based on a weight corresponding to each of the neighbor cell load parameters, to derive a weighted value for the neighbor cell load parameters;
the UE performing weighted summation calculation based on a weight corresponding to each of the neighbor cell interference parameters, to derive a weighted value for the neighbor cell interference parameters;
the UE performing weighted summation calculation based on a weight corresponding to each of the neighbor cell sensing factor parameters, to derive a weighted value for the neighbor cell sensing factor parameters;
the UE using a sum of the weighted value for the neighbor cell measurement report parameters, the weighted value for the neighbor cell load parameters, the weighted value for the neighbor cell interference parameters, and the weighted value for the neighbor cell sensing factor parameters as the target weighted result; and
the UE using a neighbor cell with the target weighted result greater than or equal to a preset threshold value as a target neighbor cell.

Based on the foregoing embodiments, in one application embodiment, the method for selecting the voice fallback target cell further includes:
Step 1: ensuring that the terminal performs measurement based on the target frequency prioritization in EPS Fallback specified by the 5G base station, where the specific scheme is as follows:
   1. For the terminal that supports to modify an order of measuring frequencies through a same measurement reconfiguration message, other previously configured measurement task(s) and related measurement object(s) (including measurement object(s) corresponding to EPS Fallback target frequencies) are deleted through an EPS Fallback measurement reconfiguration message, and meanwhile, and a new measurement task is configured for the terminal based on a target frequency prioritization specified by EPS Fallback.
   2. For the terminal that does not support to modify an order of measuring frequencies through a same measurement reconfiguration message, two measurement reconfiguration messages may be sent separately for the terminal, where the first measurement reconfiguration message is used for deleting other previously configured measurement task(s) and related measurement object(s) (including measurement object(s) corresponding to EPS Fallback target frequencies), and the second measurement reconfiguration message is used for configuring a new measurement task for the terminal based on a target frequency prioritization specified by EPS Fallback.

   The identification method for classification of the terminals includes, but is not limited to, a radio access type/frequency selection priority (RFSP, RAT/Frequency Selection Priority) index, an international mobile equipment identity software version (IMEISV), UE capability, and the like. The configuration method for classification of the terminals includes, but is not limited to, automatic analysis of dynamic configuration based on voice fallback indicator(s), manual analysis based on test result(s), or static configuration based on data provided by the operator(s)/terminal vendor(s), etc.
Step 2: after receiving a measurement report, evaluating, in combination with the signal strength/quality, load, interference and other sensing factors of neighbor cells, whether there is a need to wait for other measurement report for preferred frequencies, where the specific scheme is as follows:
   1. The terminal performs measurement based on the target frequency prioritization in EPS Fallback specified by the 5G base station in the previous step, and triggers measurement reporting after related conditions are met, where the higher the priority is, the greater the probability of the terminal preferably reporting the frequency is.
   2. After receiving an EPS Fallback measurement report reported by the terminal, the base station may determine whether a neighbor cell is a preferred target cell based on the signal strength/quality, load, interference and other sensing factors of the neighbor cell in the measurement report, which specifically includes, but is not limited to, the following determination conditions:
      a. measurement result of the neighbor cell (including RSRP, RSRQ, SINR, and the like) meets a specified threshold;
      b. load of the neighbor cell (including, but not limited to, RRC, uplink and downlink PRB utilization ratio, CCE utilization ratio, CPU utilization ratio, and the like) meets a specified threshold;
      c. interference of the neighbor cell (including, but not limited to, uplink SINR, NI, MCS, CQI, BLER, and the like) meets a specified threshold;
      d. other sensing factor of the neighbor cell (including, but not limited to, IP throughput, MoS, packet loss rate, latency, and the like) meets a specified threshold.

   It can be required that all the above conditions for determining the preferred target cell are met, a weighting factor may also be allocated to each factor to generate a final evaluation value, so as to be compared with a configuration threshold, or other determination conditions are provided.
3. If it is evaluated based on the step 2 that there is a cell meeting the conditions of the preferred target cell in the measurement report, the base station may trigger an EPS Fallback handover or redirection operation for the cell; and if it is evaluated that there is no cell meeting the conditions of the preferred target cell, the base station caches the present measurement report, and starts a timer to proceed with the next step to wait for other subsequent preferred target cell, and the timer may implement automatic calculation through manual static configuration or based on the number of EPS Fallback target frequencies.
4. If the EPS Fallback measurement report reported by the terminal is received within the timer again, it is continued to evaluate based on the step 2 whether there is a cell meeting the conditions of the preferred target cell in the measurement report, and if so, the EPS Fallback handover or redirection operation may be triggered for the cell; and otherwise, the EPS Fallback measurement report is compared with the previously cached cell measurement report, the measurement report with a better evaluation result is retained (the determination condition may be the number of factors that met the conditions of the preferred target cell, or the magnitude of the final evaluation value generated by the weighting factor allocated to each factor, or other determination conditions), and it is continued to wait for other subsequent preferred target cell.
5: If the timer expires, the EPS Fallback handover or redirection operation is triggered based on the previously cached cell measurement report.

Based on the foregoing embodiments, in one application embodiment, in connection with FIG. 1, it is assumed that the prioritization configuration of the target frequencies in EPS Fallback is F1 > F2 > F3, where F1, F2, and F3 are three different target frequencies, and the method for selecting the voice fallback target cell further includes:
Step 1, ensuring that the terminal performs measurement based on the target frequency prioritization in EPS Fallback specified by the base station, where it is assumed that there are three EPS Fallback users, it is identified through IMEISV identification that UE 1 does not support to modify the order of measuring frequencies through the same measurement reconfiguration message, and it is identified through IMEISV identification that UE 2 and UE 3 support to modify the order of measuring frequencies through the same measurement reconfiguration message.
Step 2, based on the support conditions of modifying the order of measuring frequencies through the same measurement reconfiguration message, the 5G base station respectively performs the following operations on the three users.
   1. Sending two measurement reconfiguration messages to UE1, where the first measurement reconfiguration message is used for deleting other previously configured measurement task(s) and related measurement object(s) (including measurement object(s) corresponding to EPS Fallback target frequencies), and the second measurement reconfiguration message is used for configuring a new EPS Fallback measurement task for the terminal based on the order of F1, F2, and F3.
   2. Sending a measurement reconfiguration message to UE2 and UE3, deleting other previously configured measurement task(s) and related measurement object(s) (including measurement object(s) corresponding to EPS Fallback target frequencies), and meanwhile, configuring a new EPS Fallback measurement task for the terminal based on the order of F1, F2, and F3.
Step 3, the terminal performs measurement based on the target frequency prioritization in EPS Fallback specified by the base station in the previous step, preferably measures and reports a measurement report for the F1 frequency after related conditions are met, and performs corresponding operations based on a neighbor cell evaluation state measured and reported by each user.
   1. Assuming that UE1's measurement report for F1 frequency includes a preferred neighbor cell, directly triggering the EPS Fallback handover or redirection operation for UE1 based on the cell.
   2. Assuming that UE2's measurement report for F1 frequency does not include a preferred neighbor cell (e.g., downlink RSRP is lower than a specified threshold), caching the present measurement report, and starting a manually configured timer of 1 second to proceed with the next step to wait for other subsequent and preferred target cell.
   3. Assuming that UE3's measurement report for F1 frequency does not include a preferred neighbor cell (e.g., downlink RSRP is lower than a specified threshold, a number of RRC users is greater than a specified threshold, and MoS is lower than a specified threshold), caching the present measurement report, and starting a manually configured timer of 1 second to proceed with the next step to wait for other subsequent and preferred target cell (herein, for example, the timing duration is set to be 1 second).
Step 4, performing corresponding operations based on the behaviors of UE2 and UE3 within the waiting timer.
   1. Assuming that the measurement report for F2 frequency waited by UE2 within the timer includes a preferred neighbor cell, triggering the EPS Fallback handover or redirection operation for UE2 based on the cell.
   2. Assuming that the measurement report for F2 frequency waited by UE3 within the timer does not include a preferred neighbor cell (e.g., MoS is lower than a specified threshold), but compared with the neighbor cell in the previously cached measurement report, in terms of the evaluation that the number of factors that met the conditions of the preferred target cell, the evaluation result of the neighbor cell in the present measurement report is relatively better, then retaining the measurement report for the F2 frequency. Assuming that other measurement reports are not received within the timer subsequently, when the timer expires, the EPS Fallback handover or redirection operation is triggered based on the neighbor cell in the previously cached measurement report for F2 frequency.

By means of the above steps in the present application and by means of the embodiments of the present application, the base station configures the measurement task for the terminal based on the target frequency prioritization specified by the preset voice fallback rule; the base station receives a measurement report for target frequencies, and selects a voice fallback target cell of a corresponding target frequency based on the measurement report, where the measurement report is reported by the terminal based on the target frequency prioritization; and the base station configures the measurement task for the terminal based on the target frequency prioritization specified by EPS Fallback, and selects the corresponding voice fallback target cell after receiving the measurement report. Therefore, it may help to solve that it is difficult for the prioritization configuration of the target frequencies in EPS Fallback to take into consideration a fallback success rate, a fallback latency, and a voice sensing communication indicator of the fallback target cell is solved, such that the prioritization configuration of the target frequencies in EPS Fallback can take into consideration the fallback success rate, the fallback latency, and the voice sensing communication indicator of the fallback target cell. Moreover, the voice fallback target cell can be determined based on the target frequency prioritization and the communication indicator(s) in the measurement report.

By means of the description of the above embodiments, those skilled in the art can clearly understand that the methods according to the above embodiments may be implemented by software plus a necessary universal hardware platform, and may, of course, be implemented by hardware, but in many cases, the former is a better embodiment. Based on this understanding, the technical solutions of the present application essentially or the part contributing to the prior art may be embodied in the form of a software product, the computer software product can be stored in a storage medium (e.g., an ROM/RAM, a magnetic disk and an optical disk), and includes several instructions for instructing a terminal device (which may be a mobile phone, a computer, a server, or a network device, and the like) to execute the method in the above embodiments of the present application.

The present embodiment further provides a graphic rendering processing apparatus, which is used for implementing the above embodiments and preferred embodiments, and what has been described will not be repeated here again. As used below, the term "module" may implement a combination of software and/or hardware of predetermined functions. Although the apparatus described in the following embodiments is preferably implemented in software, implementations of hardware, or a combination of software and hardware are also possible and conceivable.

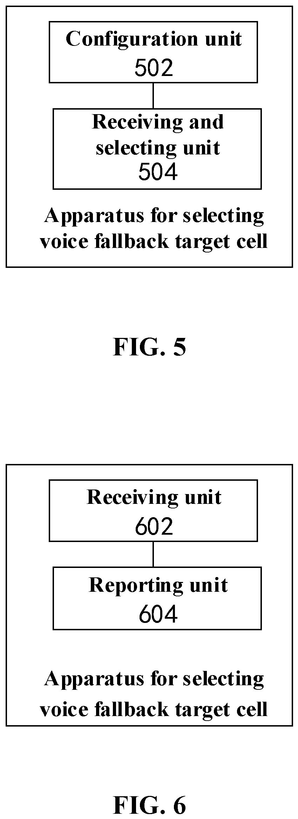

FIG. 5 is a structural block diagram of an apparatus for selecting a voice fallback target cell according to an embodiment of the present application, and as shown in FIG. 5, the apparatus includes:
a configuration unit 502 for configuring a measurement task for a terminal based on a target frequency prioritization specified by a preset voice fallback rule; and
a receiving and selecting unit 504 for receiving a measurement report for target frequencies, and selecting a voice fallback target cell of a corresponding target frequency based on the measurement report, where the measurement report is reported by the terminal based on the target frequency prioritization.

In the embodiment of the present application, the base station(s) may be different base station(s) such as 3G, 4G, or 5G base station, which is not limited in the present application in any way. For an EPS Fallback user, for example, a 5G base station deletes other measurement task(s) and related measurement object(s) through dedicated signaling, and configures the measurement task for the terminal based on a target frequency prioritization specified by EPS Fallback.

In the embodiment of the present application, after receiving the measurement report, the 5G base station evaluates, in combination with the signal strength/quality, load, interference and other sensing factors of neighbor cells, whether there is a need to wait for other measurement report for preferred frequencies, where the preferred frequencies here may include a frequency that provides better call quality for a user equipment UE.

By means of the embodiment of the present application, the base station configures the measurement task for the terminal based on the target frequency prioritization specified by the preset voice fallback rule; the base station receives a measurement report for target frequencies, which is reported by the terminal based on the target frequency prioritization, and selects the voice fallback target cell of a corresponding target frequency based on the measurement report; and the base station configures the measurement task for the terminal based on the target frequency prioritization specified by EPS Fallback, and selects the corresponding voice fallback target cell after receiving the measurement report. Therefore, the existing problem of it being impossible for the prioritization configuration of the target frequencies in EPS Fallback to take into consideration a fallback success rate, a fallback latency, and a voice sensing communication indicator of the fallback target cell is solved, such that the prioritization configuration of the target frequencies in EPS Fallback can take into consideration the fallback success rate, the fallback latency, and the voice sensing communication indicator of the fallback target cell. Moreover, the voice fallback target cell can be determined based on the target frequency prioritization and the communication indicator(s) in the measurement report.

In one embodiment, the apparatus for selecting the voice fallback target cell includes:
a first determining unit for using the target neighbor cell as the voice fallback target cell of the terminal, when the measurement report indicates that there is a target neighbor cell meeting a preset condition.

In one embodiment, the configuration unit 502 includes: a first sending module for sending a first EPS Fallback measurement reconfiguration message to a first terminal, when the terminal supports to modify an order of measuring frequencies through a same measurement reconfiguration message, where the first EPS Fallback measurement reconfiguration message is used for deleting a historical measurement task and a historical measurement object, and configuring a current measurement task for the first terminal based on the target frequency prioritization in EPS Fallback; and
a second sending module for sending a second EPS Fallback measurement reconfiguration message and a third EPS Fallback measurement reconfiguration message to the first terminal, when the terminal does not support to modify the order of measuring frequencies through a same measurement reconfiguration message, where the second EPS Fallback measurement reconfiguration message is used for deleting the historical measurement task and the historical measurement object, and the third EPS Fallback measurement reconfiguration message is used for configuring a current measurement task for the first terminal based on the target frequency prioritization in EPS Fallback.

In one embodiment, determining that the terminal supports to modify the order of measuring frequencies through the same measurement reconfiguration message based on at least one of the following:
a system/frequency selection priority (RFSP) index;
an international mobile equipment identity software version (IMEISV); or
user equipment (UE) capability.

In one embodiment, the preset condition includes at least one of the following that:
a neighbor cell measurement report parameter meets a first preset threshold, where the neighbor cell measurement report parameter includes at least one of the following: reference signal received power (RSRP), reference signal received quality (RSRQ), or signal to interference plus noise ratio (SINR);
a neighbor cell load parameter meets a second preset threshold, where the neighbor cell load parameter includes at least one of the following: radio resource control (RRC), uplink and downlink physical resource block (PRB) utilization ratio, control channel element (CCE) utilization ratio, central processing unit (CPU) utilization ratio, and the like;
a neighbor cell interference parameter meets a third preset threshold, where the neighbor cell interference parameter includes at least one of the following: uplink signal to interference plus noise ratio (SINR), noise interference (NI), modulation and coding scheme (MCS), channel quality indicator (CQI), or block error rate (BLER); or
a neighbor cell sensing factor parameter meets a fourth preset threshold, where the neighbor cell sensing factor parameter includes at least one of the following: internet protocol throughput (IP throughput), mean opinion score (MoS), packet loss rate, or latency.

In one embodiment, the apparatus for selecting the voice fallback target cell further includes:
a second determining unit for using a neighbor cell with a target weighted result greater than or equal to a preset threshold value as a target cell, where the target weighted result is derived by the following:
performing weighted summation calculation based on a weight corresponding to each of the neighbor cell measurement report parameters, to derive a weighted value for the neighbor cell measurement report parameters;
performing weighted summation calculation based on a weight corresponding to each of the neighbor cell load parameters, to derive a weighted value for the neighbor cell load parameters;
performing weighted summation calculation based on a weight corresponding to each of the neighbor cell interference parameters, to derive a weighted value for the neighbor cell interference parameters;
performing weighted summation calculation based on a weight corresponding to each of the neighbor cell sensing factor parameters, to derive a weighted value for the neighbor cell sensing factor parameters; and
using a sum of the weighted value for the neighbor cell measurement report parameters, the weighted value for the neighbor cell load parameters, the weighted value for the neighbor cell interference parameters, and the weighted value for the neighbor cell sensing factor parameters as the target weighted result.

In one embodiment, the apparatus for selecting the voice fallback target cell further includes:
a triggering module for triggering an EPS Fallback handover or redirection operation for the terminal, when the measurement report indicates that there is a target neighbor cell meeting the preset condition; and
a caching module for using the measurement report as a first measurement report and caching the measurement report, and setting a monitoring duration based on a timer, when the measurement report indicates that there is no target neighbor cell meeting the preset condition.

In one embodiment, in the caching module, the timing duration is manually and statically configured, or the timing duration is calculated based on a number of EPS Fallback target frequencies.

In one embodiment, the apparatus for selecting the voice fallback target cell further includes:
a receiving unit for receiving the measurement report sent by the terminal within the monitoring duration again;
a first triggering unit for triggering the EPS Fallback handover or redirection operation for the terminal, when the measurement report indicates that there is a target neighbor cell meeting the preset condition;
a comparing unit for comparing the current measurement report with a measurement report in a cache, when the measurement report indicates that there is no target neighbor cell meeting the preset condition; and
a third determining unit for replacing the first measurement report with a second measurement report, when a comparison result indicates that a number of neighbor cells meeting a second preset condition in the second measurement report is greater than a number of neighbor cells meeting the second preset condition in the first measurement report.

In one embodiment, the apparatus for selecting the voice fallback target cell further includes:
a second triggering unit for triggering the EPS Fallback handover or redirection operation based on cells included in the measurement report in the cache, when the monitoring duration expires.

FIG. 6 is a structural block diagram of an apparatus for selecting a voice fallback target cell according to an embodiment of the present application, and as shown in FIG. 6, the apparatus includes:
a receiving unit 602 for receiving a measurement task, where the measurement task is configured by a base station for the terminal based on a target frequency prioritization in EPS Fallback; and
a reporting unit 604 for reporting a measurement report for target frequencies to the base station based on the configured measurement task, such that the base station selects a voice fallback target cell of a corresponding target frequency based on the measurement report.

In the embodiment of the present application, for an EPS Fallback user, for example, the terminal UE receives other measurement task(s) and related measurement object(s), which are deleted by a 5G base station through dedicated signaling, and configures the measurement task based on a target frequency prioritization specified by EPS Fallback.

In the embodiment of the present application, after receiving the measurement report reported by the UE, the 5G base station evaluates, in combination with the signal strength/quality, load, interference and other sensing factors of neighbor cells, whether there is a need to wait for other measurement report for preferred frequencies. The preferred frequencies here may include a frequency that provides better call quality for the user equipment UE.

By means of the embodiment of the present application, the terminal receives the measurement task, which is configured by the base station for the terminal based on the target frequency prioritization in EPS Fallback; the terminal reports the measurement report for target frequencies to the base station based on the configured measurement task, such that the base station selects the voice fallback target cell of a corresponding target frequency based on the measurement report; and the base station configures the measurement task for the terminal based on the target frequency prioritization specified by EPS Fallback, and the terminal selects the corresponding voice fallback target cell after receiving the measurement report. Therefore, it may help to solve that it is difficult for the prioritization configuration of the target frequencies in EPS Fallback to take into consideration a fallback success rate, a fallback latency, and a voice sensing communication indicator of the fallback target cell, such that the prioritization configuration of the target frequencies in EPS Fallback can take into consideration the fallback success rate, the fallback latency, and the voice sensing communication indicator of the fallback target cell. Moreover, the voice fallback target cell can be determined based on the target frequency prioritization and the communication indicator(s) in the measurement report.

In one embodiment, the apparatus for selecting the voice fallback target cell includes:
a first weighting module for performing weighted summation calculation based on a weight corresponding to each of the neighbor cell measurement report parameters, to derive a weighted value for the neighbor cell measurement report parameters;
a second weighting module for performing weighted summation calculation based on a weight corresponding to each of the neighbor cell load parameters, to derive a weighted value for the neighbor cell load parameters;
a third weighting module for performing weighted summation calculation based on a weight corresponding to each of the neighbor cell interference parameters, to derive a weighted value for the neighbor cell interference parameters;
a fourth weighting module for performing weighted summation calculation based on a weight corresponding to each of the neighbor cell sensing factor parameters, to derive a weighted value for the sensing factor parameters;
a fifth weighting module for using a sum of the weighted value for the neighbor cell measurement report parameters, the weighted value for the neighbor cell load parameters, the weighted value for the neighbor cell interference parameters, and the neighbor cell weighted value for the neighbor cell sensing factor parameters as a target weighted result; and
a determining module for using a neighbor cell with the target weighted result greater than or equal to a preset threshold value as a target neighbor cell.

It should be noted that, the above modules may be implemented by software or hardware, and for the latter, the above modules may be implemented in the following manner, but is not limited thereto: the above modules are all located in the same processor; or, the above modules are respectively located in different processors in any combination.

An embodiment of the present application further provides a computer readable storage medium, in which a computer program is stored, wherein the computer program is configured to execute, when running, the steps in any one of the foregoing method embodiments.

In one exemplary embodiment, the computer readable storage medium may include, but is not limited to, various media capable of storing computer programs, such as a USB flash disk, a read-only memory (ROM for short), a random access memory (RAM for short), a mobile hard disk, a magnetic disk, or an optical disc, etc.

An embodiment of the present application further provides an electronic device, including a memory and a processor, wherein a computer program is stored in the memory, and the processor is configured to run the computer program, so as to execute the steps in any one of the foregoing method embodiments.

In one exemplary embodiment, the electronic device may further include a transmission device and an input and output device, wherein the transmission device is connected with the processor, and the input and output device is connected with the processor.

For specific examples in the present embodiment, reference may be made to the examples described in the above embodiments and exemplary embodiments, and thus details are not described in the present embodiment again.

Obviously, it should be understood by those skilled in the art that, the above modules or steps of the present application may be implemented by a general-purpose computing apparatus, may be concentrated on a single computing apparatus or distributed on a network composed of a plurality of computing apparatuses, and may also be implemented by program codes executable by the computing apparatus, therefore the modules or steps may be stored in a storage apparatus to be executed by the computing apparatus, and in some cases, the shown or described steps may be executed in a sequence different from that herein, or the steps are respectively made into various integrated circuit modules, or a plurality of modules or steps therein may be made into a single integrated circuit module for implementation. As such, the present application is not limited to any particular hardware and software combination.

The foregoing description is only preferred embodiments of the present application, and is not intended to limit the present application, and for those skilled in the art, the present application may have various changes and modifications. Any modifications, equivalent replacements, improvements, and the like, made within the principles of the present application, shall all fall within the protection scope of the present application.

## Claims

1. A method for selecting a voice fallback target cell, comprising:
configuring, by a base station, a measurement task for a terminal based on a target frequency prioritization specified by a preset voice fallback rule; and
receiving a measurement report for target frequencies, and selecting a voice fallback target cell of a corresponding target frequency based on the measurement report, wherein the measurement report is reported by the terminal based on the target frequency prioritization.

2. The method according to claim 1, wherein selecting the voice fallback target cell of the corresponding target frequency based on the measurement report comprises:
in response to the measurement report indicating that there is a target neighbor cell meeting a preset condition, using the target neighbor cell as the voice fallback target cell of the terminal.

3. The method according to claim 1, wherein configuring, by the base station, the measurement task for the terminal based on the target frequency prioritization specified by the preset voice fallback rule comprises:
in response to a first terminal supporting to modify an order of measuring frequencies through a same measurement reconfiguration message, sending a first voice fallback measurement reconfiguration message to the first terminal, wherein the first voice fallback measurement reconfiguration message is used for deleting a historical measurement task and a historical measurement object, and configuring a current measurement task for the first terminal based on the target frequency prioritization, and the terminal comprises the first terminal; and
in response to a second terminal not supporting to modify an order of measuring frequencies through a same measurement reconfiguration message, sending a second voice fallback measurement reconfiguration message and a third voice fallback measurement reconfiguration message to the second terminal, wherein the second voice fallback measurement reconfiguration message is used for deleting the historical measurement task and the historical measurement object, and the third voice fallback measurement reconfiguration message is used for configuring a current measurement task for the second terminal based on the target frequency prioritization, and the terminal comprises the second terminal.

4. The method according to claim 3, wherein determining whether the terminal supports to modify the order of measuring frequencies through the same measurement reconfiguration message based on at least one of the following:
a system/frequency selection priority (RFSP) index;
an international mobile equipment identity software version (IMEISV); or
user equipment (UE) capability.

5. The method according to claim 2, wherein the preset condition comprises at least one of the following that:
a neighbor cell measurement report parameter meets a first preset threshold, wherein the neighbor cell measurement report parameter comprises at least one of the following: reference signal received power (RSRP), reference signal received quality (RSRQ), or signal to interference plus noise ratio (SINR);
a neighbor cell load parameter meets a second preset threshold, wherein the neighbor cell load parameter comprises at least one of the following: radio resource control (RRC), uplink and downlink physical resource block (PRB) utilization ratio, control channel element (CCE) utilization ratio, central processing unit (CPU) utilization ratio, and the like;
a neighbor cell interference parameter meets a third preset threshold, wherein the neighbor cell interference parameter comprises at least one of the following: uplink signal to interference plus noise ratio (SINR), noise interference (NI), modulation and coding scheme (MCS), channel quality indicator (CQI), or block error rate (BLER); or
a neighbor cell sensing factor parameter meets a fourth preset threshold, wherein the neighbor cell sensing factor parameter comprises at least one of the following: network throughput, mean opinion score (MoS), packet loss rate, or latency.

6. The method according to claim 2, further comprising:
in response to the measurement report indicating that there is a target neighbor cell meeting the preset condition, triggering a voice fallback handover or redirection operation for the terminal; and
in response to the measurement report indicating that there is no target neighbor cell meeting the preset condition, using the measurement report as a first measurement report and caching the measurement report, and setting a monitoring duration based on a timer.

7. The method according to claim 6, wherein the monitoring duration is manually and statically configured, or the monitoring duration is calculated based on a number of voice fallback target frequencies.

8. The method according to claim 6, further comprising:
receiving a second measurement report sent by the terminal within the monitoring duration;
in response to the second measurement report indicating that there is a target neighbor cell meeting the preset condition, triggering the voice fallback handover or redirection operation for the terminal;
in response to the second measurement report indicating that there is no target neighbor cell meeting the preset condition:
comparing the second measurement report with the first measurement report; and
in response to a comparison result indicating that a number of parameters meeting the preset condition of a neighbor cell in the second measurement report is greater than a number of parameters meeting the preset condition in the first measurement report, replacing the first measurement report with the second measurement report.

9. The method according to claim 8, further comprising:
using a neighbor cell with a target weighted result greater than or equal to a preset threshold value as a target cell meeting the preset condition, wherein the target weighted result is derived by at least one of the following:
performing weighted summation calculation based on a weight corresponding to each of neighbor cell measurement report parameters, to derive a weighted value for the neighbor cell measurement report parameters as the target weighted result;
performing weighted summation calculation based on a weight corresponding to each of neighbor cell load parameters, to derive a weighted value for the neighbor cell load parameters as the target weighted result;
performing weighted summation calculation based on a weight corresponding to each of neighbor cell interference parameters, to derive a weighted value for the neighbor cell interference parameters as the target weighted result; or
performing weighted summation calculation based on a weight corresponding to each of neighbor cell sensing factor parameters, to derive a weighted value for the sensing factor parameters as the target weighted result; and
in response to a comparison result indicating that the target weighted result of the neighbor cell in the second measurement report is greater than the target weighted result in the first measurement report, replacing the first measurement report with the second measurement report.

10. The method according to claim 6, further comprising:
in response to determining that the monitoring duration expires, triggering the voice fallback handover or redirection operation based on cells included in the first measurement report.

11. A method for selecting a voice fallback target cell, comprising:
receiving, by a terminal, a measurement task, wherein the measurement task is configured by a base station for the terminal based on a target frequency prioritization specified by a voice fallback rule; and
reporting, by the terminal and based on the configured measurement task, a measurement report for target frequencies to the base station, such that the base station selects a voice fallback target cell of a corresponding target frequency based on the measurement report.

12. An apparatus for selecting a voice fallback target cell, comprising:
a configuration unit for configuring a measurement task for a terminal based on a target frequency prioritization specified by a preset voice fallback rule; and
a receiving and selecting unit for receiving a measurement report for target frequencies, and selecting a voice fallback target cell of a corresponding target frequency based on the measurement report, wherein the measurement report is reported by the terminal based on the target frequency prioritization.

13. An apparatus for selecting a voice fallback target cell, comprising:
a receiving unit for receiving a measurement task, wherein the measurement task is configured by a base station for a terminal based on a target frequency prioritization specified by a preset voice fallback rule; and
a reporting unit for reporting, based on the configured measurement task, a measurement report for target frequencies to the base station, such that the base station selects a voice fallback target cell of a corresponding target frequency based on the measurement report.

14. A computer readable storage medium having computer program stored thereon, wherein the computer program is configured to implement, when executed, the method according to any of claims 1 to 10 or 11.

15. An electronic device, comprising a memory and a processor, wherein the memory having computer program stored thereon, and the processor is configured to execute the computer program to implement the method according to any one of claims 1 to 10 or 11.
